(19) Europäisches Patentamt
European Patent Office
Office européen des brevets

(11) **EP 3 011 273 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **14728870.8**

(22) Anmeldetag: **27.05.2014**

(51) Int Cl.:
***G01C 21/34*** *(2006.01)*

(86) Internationale Anmeldenummer:
**PCT/EP2014/060907**

(87) Internationale Veröffentlichungsnummer:
**WO 2014/202346 (24.12.2014 Gazette 2014/52)**

(54) **VERFAHREN ZUM ERMITTELN VON KORREKTURWERTEN FÜR EINEN ROUTENBERECHNUNGSALGORITHMUS**

METHOD FOR DETERMINING CORRECTION VALUES FOR A ROUTE CALCULATION ALGORITHM

PROCÉDÉ POUR DÉTERMINER DES VALEURS DE CORRECTION POUR UN ALGORITHME DE CALCUL DE ROUTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2013 DE 102013211605**

(43) Veröffentlichungstag der Anmeldung:
**27.04.2016 Patentblatt 2016/17**

(73) Patentinhaber: **Bayerische Motoren Werke Aktiengesellschaft**
**80809 München (DE)**

(72) Erfinder: **TAVA, Marcello**
**81369 München (DE)**

(56) Entgegenhaltungen:
**EP-A2- 0 790 486      DE-A1-102008 027 957**

**Beschreibung**

Die Erfindung betrifft ein Verfahren und eine Vorrichtung zum Ermitteln einer Route für ein Navigationssystem und/oder ein Fahrerassistenzsystem. Ferner betrifft die Erfindung ein Verfahren zum Ermitteln von Korrekturwerten für einen Routenberechnungsalgorithmus sowie ein System und ein Computerprogrammprodukt.

In Fahrzeugnavigationssystemen wird zur Routenberechung in vielen Fällen der sogenannte A*-Algorithmus genutzt. Dieser Algorithmus dient der Berechnung eines kürzesten Pfades zwischen einem Startknoten und einem oder mehreren beliebigen Knoten in einem Graphen mit positivem Kantengewicht. In der Graphentheorie ist ein Graph eine Menge von Punkten, wobei die Punkte teilweise durch sogenannte Kanten miteinander verbunden sind. Die Punkte werden auch Knoten genannt. Die Kanten werden auch als Linien oder Verbindungen bezeichnet. Die Form der Punkte und Kanten spielt in der Graphentheorie keine Rolle. Als Kantengewicht wird in der Graphentheorie eine der jeweiligen Kante zugeordnete reelle Zahl bezeichnet. Die reelle Zahl kann beispielsweise eine Entfernung oder eine Zeitdauer oder einen Benzinverbrauch repräsentieren.

Der A*-Algorithmus nutzt eine Schätzfunktion (Heuristik), um zielgerichtet zu suchen und damit die Laufzeit zu verringern. Im Falle, dass die Schätzfunktion die realen Strecken-und/oder Wegeverhältnisse eines Gebiets nicht ausreichend genau abbildet, kann es jedoch vorkommen, dass die Berechnung der optimalen Route sehr lange dauert.

Dokument DE 10 2008 027957 A1 offenbart ein Routingverfahren zur Berechnung einer Route zwischen einem ersten Routenendpunkt und einem zweiten Routenendpunkt unter Verwendung einer elektronisch gespeicherten Straßenkarte basierend auf einer Gesamtkostenberechnung, wobei Korrekturwerte für den Algorithmus ermittelt werden

Die Aufgabe, die der Erfindung zu Grunde liegt, ist es, ein Verfahren und eine Vorrichtung zum Ermitteln einer Route, ein Verfahren zum Ermitteln von Korrekturwerten für einen Routenberechnungsalgorithmus sowie ein System und ein Computerprogrammprodukt zu schaffen, die einen Beitrag leisten, eine Effizienz der Routenermittlung zu erhöhen, insbesondere die Routenermittlung zu beschleunigen.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich gemäß einem ersten Aspekt aus durch ein Verfahren zum Ermitteln von Korrekturwerten für einen Routenberechnungsalgorithmus auf Basis von digitalen Kartendaten für ein Streckennetz und/oder Wegenetz eines vorgegebenen Gebiets. Hierbei umfassen die digitalen Kartendaten jeweilige Knoten des Gebiets und Verbindungen zwischen den jeweiligen Knoten des Gebiets. Ferner umfassen die digitalen Kartendaten jeweilige Kantenkosten für die jeweiligen Verbindungen der Knoten. Das Gebiet wird vorgegeben in mehrere Kacheln unterteilt, für die Korrekturwerte ermittelt werden, wobei jeweils eine der Kacheln des Gebietes als Ausgangskachel bestimmt wird und die jeweils verbleibenden Kacheln als Bezugskacheln bestimmt werden und Sonderknoten vorgegeben sind, die in der Ausgangskachel angeordnet sind und die eine echte oder unechte Teilmenge aller Knoten der Ausgangskachel bilden, und Sonderknoten vorgegeben sind, die in der jeweiligen Bezugskachel angeordnet sind und die eine echte oder unechte Teilmenge aller Knoten der jeweiligen Bezugskachel bilden. Für die jeweilige Ausgangkachel wird jeweils in Bezug auf eine der Bezugskacheln ein Korrekturwert ermittelt, derart dass für jeden Sonderknoten der jeweiligen Ausgangskachel jeweils ein Kostenverhältnis ermittelt wird in Bezug auf jeden Sonderknoten der Bezugskachel abhängig von den Kantenkosten der Verbindungen, die zwischen dem jeweiligen Sonderknoten der Ausgangskachel und dem jeweiligen Sonderknoten der Bezugskachel liegen und die eine optimale Route zwischen dem jeweiligen Sonderknoten der Ausgangskachel und dem jeweiligen Sonderknoten der Bezugskachel repräsentieren. Das Kostenverhältnis wird ferner ermittelt abhängig von einem Heuristikwert des jeweiligen Sonderknotens der Ausgangskachel in Bezug auf den jeweiligen Sonderknoten der Bezugskachel. Ein Mittelwert wird ermittelt abhängig von den ermittelten Kostenverhältnissen. Abhängig von dem Mittelwert wird der Korrekturwert der Ausgangskachel ermittelt in Bezug auf die jeweilige Bezugskachel.

Die Vorgabe der Sonderknoten der jeweiligen Ausgangskachel und der Sonderknoten der jeweiligen Bezugskachel ermöglicht, dass sich die Anzahl der zu berechnenden Korrekturwerte in Grenzen hält, gleichzeitig aber gewährleistet werden kann, dass eine ausreichende statistische Relevanz beziehungsweise Genauigkeit der Korrekturwerte gewährleistet werden kann. Vorteilhafterweise ermöglicht dies, die Korrekturwerte mit ausreichender Genauigkeit zu ermitteln, so dass eine nachfolgende Routenermittlung effizienter erfolgen kann. Die Sonderknoten können insbesondere vorgegeben ausgewählt werden. Diese ausgewählten Knoten können beispielsweise stochastisch ausgewählt werden und/oder abhängig von zumindest einer vorgegebenen Regel.

Die Ermittlung der Korrekturwerte kann vorteilhafterweise unabhängig von einer aktuellen Routenermittlung erfolgen, beispielsweise während einer Kartenkompilierung.

Das jeweilige Kostenverhältnis ist ein direktes Maß für eine Abweichung zwischen dem Heuristikwert des jeweiligen Sonderknotens der Ausgangskachel in Bezug auf den jeweiligen Sonderknoten der Bezugskachel und der Summe der Kantenkosten einer optimalen Route von dem jeweiligen Sonderknoten der Ausgangskachel zu dem jeweiligen Sonderknoten der Bezugskachel.

Für die Ausgangskachel und/oder die jeweilige Bezugskacheln können je nach Bedarf jeweils eine unterschiedliche Anzahl von Sonderknoten ausgewählt werden. So kann ein zusätzlich benötigter Bedarf an Speicherplatz für das Speichern der Korrekturwerte geeignet gering gehalten werden.

Dem Mittelwert liegt hierbei eine Berechnungsvorschrift zugrunde, mit der man aus zwei oder mehr Zahlen eine weitere berechnet, die zwischen den gegeben Zahlen liegt.

Die Kantenkosten und die geschätzten Kosten weisen eine vorgegebene Korrespondenz auf. Die Kantenkosten repräsentieren einen Wert einer Gewichtungsfunktion. Die Gewichtungsfunktion gewichtet jeweilige Einzelkantenkosten der jeweiligen Verbindung, beispielsweise Streckenlängenkosten und/oder Fahrtdauerkosten, auf eine vorgegebene Weise. Die geschätzten Kosten repräsentieren den Wert einer Schätzfunktion, die geschätzte Einzelkosten in einer analogen vorgegebenen Weise gewichtet wie die Gewichtungsfunktion. Die optimale Route ist optimal in Bezug auf die Kantenkosten.

Der Heuristikwert wird mittels einer Schätzfunktion, die auch Heuristik genannt wird, ermittelt. Die Schätzfunktion kann beispielsweise eine Funktion umfassen zum Ermitteln eines kürzesten Abstands zweier Punkte in einem vorgegebenen zweidimensionalen Koordinatensystem (Euklidische Distanz). Für den A*-Algorithmus ist Vorraussetzung, dass die Schätzfunktion zulässig ist. Die Schätzfunktion ist zulässig, wenn der jeweilige Heuristikwert die jeweilige Summe der Kantenkosten der Verbindungen der optimalen Route zwischen zwei zu betrachtenden Knoten nicht übersteigt. Das heißt, der jeweilige Heuristikwert muss stets im Intervall [0;w] liegen, wenn w jeweils die Summe der Kantenkosten der Verbindungen der optimalen Route zwischen den zwei zu betrachtenden Knoten bezeichnet. Die jeweiligen Korrekturwerte können daher bei Bedarf abhängig von angepassten Mittelwerten ermittelt werden, so dass sichergestellt werden kann, dass die Zulässigkeitsvoraussetzungen des A*-Algorithmus auch erfüllt sind bei Nutzung der Korrekturwerte. Beispielsweise können die jeweiligen Mittelwerte dadurch angepasst werden, dass sie dividiert werden mit einem vorgegebenen Faktor, der größer als 1 ist.

In einer vorteilhaften Ausgestaltung des ersten Aspekts umfassen die digitalen Kartendaten die jeweiligen Positionen der Knoten des Gebiets. Der Heuristikwert des jeweiligen Sonderknotens der Ausgangskachel in Bezug auf den jeweiligen Sonderknoten der Bezugskachel wird ermittelt abhängig von der Position des jeweiligen Sonderknotens der Ausgangskachel und der Position des jeweiligen Sonderknotens der Bezugskachel. Vorteilhafterweise ermöglicht dies, Speicherkapazität einzusparen.

In einer weiteren vorteilhaften Ausgestaltung des ersten Aspekts umfassen die digitalen Kartendaten vorgegebene Heuristikwerte für die jeweiligen Knoten in Bezug auf die jeweils anderen Knoten des Gebiets, die jeweils geschätzte Kosten von dem jeweils einen Knoten zu dem jeweils anderen Knoten repräsentieren, und somit der Heuristikwert des jeweiligen Sonderknotens der Ausgangskachel in Bezug auf den jeweiligen Sonderknoten der Bezugskachel vorgegeben ist. Vorteilhafterweise ermöglicht dies, Rechenkapazität bei der Berechnung der Korrekturwerte einzusparen.

In einer weiteren vorteilhaften Ausgestaltung des ersten Aspekts repräsentiert der Heuristikwert des jeweiligen Sonderknotens der Ausgangskachel in Bezug auf den jeweiligen Sonderknoten der Bezugskachel die Euklidische Distanz zwischen dem jeweiligen Sonderknoten der Ausgangskachel und dem jeweiligen Sonderknoten der Bezugskachel. Dies ermöglicht ein einfaches Ermitteln der Korrekturwerte.

In einer weiteren vorteilhaften Ausgestaltung des ersten Aspekts repräsentiert der Mittelwert der Kostenverhältnisse einen arithmetischen Mittelwert der Kostenverhältnisse. Dies hat den Vorteil, dass die jeweiligen Korrekturwerte einfach bereitgestellt werden können.

Die Erfindung zeichnet sich gemäß einem zweiten und dritten Aspekt aus durch ein Verfahren und eine korrespondierende Vorrichtung zum Ermitteln einer Route für ein Navigationssystem und/oder ein Fahrerassistenzsystem. Dem Navigationssystem und/oder Fahrerassistenzsystem ist zumindest eine Speichereinheit zum Speichern von digitalen Kartendaten für ein Streckennetz und/oder Wegenetz eines vorgegebenen Gebiets zugeordnet. Hierbei umfassen die digitalen Kartendaten jeweilige Knoten des Gebiets und Verbindungen zwischen den jeweiligen Knoten des Gebiets. Ferner umfassen die digitalen Kartendaten jeweilige Kantenkosten für die jeweiligen Verbindungen der Knoten und eine Menge von Korrekturwerten, die gemäß dem ersten Aspekt ermittelt sind. Die Route von einem vorgegebenen Ausgangsknoten zu einem vorgegebenen Zielknoten wird ermittelt abhängig von einem vorgegebenen Routenkriterium und abhängig von den in der Speichereinheit gespeicherten digitalen Kartendaten derart, dass für eine mögliche Expansion eines jeweiligen aktuellen Knotens für den aktuellen Knoten Gesamtkosten ermittelt werden abhängig von einer Summe von Kantenkosten einer optimalen Route vom Ausgangsknoten bis zum aktuellen Knoten und einem zielknotenbezogenen Heuristikwert für den aktuellen Knoten sowie einem zielknotenbezogenen Korrekturwert. Der zielknotenbezogene Heuristikwert repräsentiert jeweils geschätzte Kosten von dem aktuellen Knoten zu dem Zielknoten. Der zielknotenbezogene Korrekturwert wird abhängig von dem aktuellen Knoten und dem Zielknoten aus der Menge von Korrekturwerten ausgewählt.

Vorteilhafte Ausgestaltungen des ersten Aspekts gelten hierbei auch für den zweiten und dritten Aspekt.

Die Daten zu der ermittelten Route können an das Navigationssystem weitergeleitet werden zur optischen und/oder akustischen Signalisierung der ermittelten Route, beispielsweise auf einem Display, und/oder zum Ermitteln und Ausgeben von Fahrhinweisen. Zusätzlich oder alternativ können die Daten an das Fahrerassistenzsystem weitergeleitet werden, wobei das vorgegebene Fahrerassistenzsystem ausgebildet ist, vorgegebene Fahrzeugfunktionen eines Fahrzeugs abhängig von den ermittelten Daten der Route zu steuern.

Die Korrekturwerte werden vorzugsweise im Vorfeld ermittelt. Die jeweiligen zielknotenbezogenen Korrekturwerte sind zumindest eine Untermenge der gespeicherten Korrekturwerte.

Der jeweilige zielknotenbezogene Heuristikwert kann beispielsweise mit dem zielknotenbezogenen Korrekturwert bewertet werden. Beispielsweise kann, wenn der zielknotenbezogene Heuristikwert die realen Strecken- und/oder Wegeverhältnisse des Gebiets nicht ausreichend genau abbildet, der zielknotenbezogene Heuristikwert einen zu kleinen Wert aufweisen. Durch die Bewertung mit dem zielknotenbezogenen Korrekturwert kann dieser zumindest zum Teil kompensiert werden. Im Vergleich zu der Ermittlung der Route ohne Korrekturwerte kann bei Nutzung der Korrekturwerte die optimale Route mit wesentlich weniger Berechnungsschritten ermittelt werden.

Die optimale Route ist hierbei optimal in Bezug auf das vorgegebene Routenkriterium. Das Expandieren eines Knotens bedeutet, dass ausgehend von diesem Knoten die Gesamtkosten weiterer Knoten ermittelt werden, die eine Verbindung zu diesem Knoten aufweisen. Die Ermittlung der Route kann beispielsweise gemäß einem A*-Algorithmus erfolgen. Bei dem A*-Algorithmus wird jeweils der Knoten, der die niedrigsten Gesamtkosten aufweist, als nächstes expandiert. Für die Entscheidung, ob der aktuelle Knoten im nächsten Schritt expandiert wird, werden die Gesamtkosten des aktuellen Knotens ermittelt und mit den Gesamtkosten weiterer möglicher Expansionsknoten verglichen.

Die Kantenkosten und die geschätzten Kosten weisen eine vorgegebene Korrespondenz auf. Die Kantenkosten repräsentieren einen Wert einer Gewichtungsfunktion. Die Gewichtungsfunktion gewichtet jeweilige Einzelkantenkosten der jeweiligen Verbindung, beispielsweise Streckenlängenkosten und/oder Fahrtdauerkosten, auf eine vorgegebene Weise. Die geschätzten Kosten repräsentieren den Wert einer Schätzfunktion, die geschätzte Einzelkosten, beispielsweise geschätzte Streckenlängenrestkosten von einem aktuellen Knoten bis zum Zielknoten und/oder geschätzte Fahrdauerrestkosten von dem aktuellen Knoten bis zum Zielknoten, in einer analogen vorgegebenen Weise gewichtet wie die Gewichtungsfunktion. In einem vereinfachten Fall können die Kantenkosten beispielsweise die Streckenlängenkosten der jeweiligen Verbindung repräsentieren und die geschätzten Kosten können beispielsweise die geschätzten Streckenlängenrestkosten, zum Beispiel die Euklidische Distanz, zwischen dem aktuellen Knoten und dem Zielknoten repräsentieren.

In einer vorteilhaften Ausgestaltung des zweiten und des dritten Aspekts umfassen die digitalen Kartendaten die jeweiligen Positionen der Knoten des Gebiets und der zielknotenbezogene Heuristikwert wird ermittelt abhängig von der Position des aktuellen Knotens und der Position des Zielknotens. Vorteilhafterweise kann so eine Speicherkapazität der Speichereinheit gering gehalten werden.

In einer weiteren vorteilhaften Ausgestaltung des zweiten und des dritten Aspekts umfassen die digitalen Kartendaten vorgegebene Heuristikwerte für die jeweiligen Knoten in Bezug auf die jeweils anderen Knoten des Gebiets, die jeweils geschätzte Kosten von dem jeweils einen Knoten zu dem jeweils anderen Knoten repräsentieren, und der zielknotenbezogene Heuristikwert ist somit vorgegeben. Vorteilhafterweise ermöglicht dies, Rechenkapazität einzusparen, da die zielknotenbezogenen Heuristikwerte im Vorfeld und damit unabhängig vor einer aktuellen Routenberechnung ermittelt werden können.

In einer weiteren vorteilhaften Ausgestaltung des zweiten und des dritten Aspekts repräsentiert der jeweilige zielknotenbezogene Heuristikwert die Euklidische Distanz zwischen dem aktuellen Knoten und dem Zielknoten. Vorteilhafterweise können so die zielknotenbezogenen Heuristikwerte sehr einfach ermittelt werden. Ferner ist die Euklidische Distanz zum Ziel eine monotone Schätzfunktion (Heuristik) und erfüllt somit insbesondere die Zuverlässigkeitsvoraussetzung für den A*-Algorithmus.

Gemäß einem vierten Aspekt zeichnet sich die Erfindung aus durch ein System, das eine Speichereinheit und eine Vorrichtung gemäß dem dritten Aspekt aufweist und bei dem in der Speichereinheit digitale Kartendaten für ein Streckennetz und/oder Wegenetz eines vorgegebenen Gebiets gespeichert sind. Die Vorrichtung ist mit der Speichereinheit signaltechnisch gekoppelt und ausgebildet, die digitalen Kartendaten aus der Speichereinheit auszulesen. Hierbei umfassen die digitalen Kartendaten jeweilige Knoten des Gebiets und Verbindungen zwischen den jeweiligen Knoten des Gebiets. Ferner umfassen die digitalen Katendaten jeweilige Kantenkosten für die jeweiligen Verbindungen der. Des Weiteren umfassen die digitalen Kartendaten eine Menge an Korrekturwerten, die gemäß dem ersten Aspekt ermittelt sind.

Vorteilhafte Ausgestaltungen des ersten, zweiten und dritten Aspekts gelten hierbei auch für den vierten Aspekt.

Die Erfindung zeichnet sich gemäß einem fünften Aspekt aus durch ein Computerprogrammprodukt, das ausführbaren Programmcode umfasst, wobei der Programmcode bei Ausführung durch eine Datenverarbeitungsvorrichtung die Schritte des Verfahrens gemäß dem ersten Aspekt ausführt. Vorteilhafte Ausgestaltungen des ersten Aspekts gelten hierbei auch für den fünften Aspekt.

Ausführungsbeispiele der Erfindung sind im Folgenden anhand der schematischen Zeichnungen erläutert.

Es zeigen:

Figur 1 ein Ablaufdiagramm für ein erstes Programm zum Ermitteln von Korrekturwerten für einen Routenermittlungsalgorithmus,

Figur 2a bis 2c      Graphiken zur Veranschaulichung der Korrekturwertermittlung,

Figur 3a bis 3c      Graphiken zur Veranschaulichung der Routenermittlung unter Zuhilfenahme der Korrekturwerte,

Figur 4      ein weiteres Ausführungsbeispiel für eine Aufteilung eines Gebiets in Segmentbereiche,

Figur 5      ein Blockschaltbild für ein System und

Figur 6a bis 6c      Graphiken zur Veranschaulichung einer Routenermittlung mit dem A*-Algorithmus gemäß dem Stand der Technik.

Elemente gleicher Konstruktion oder Funktion sind figuren-übergreifend mit den gleichen Bezugszeichen versehen.

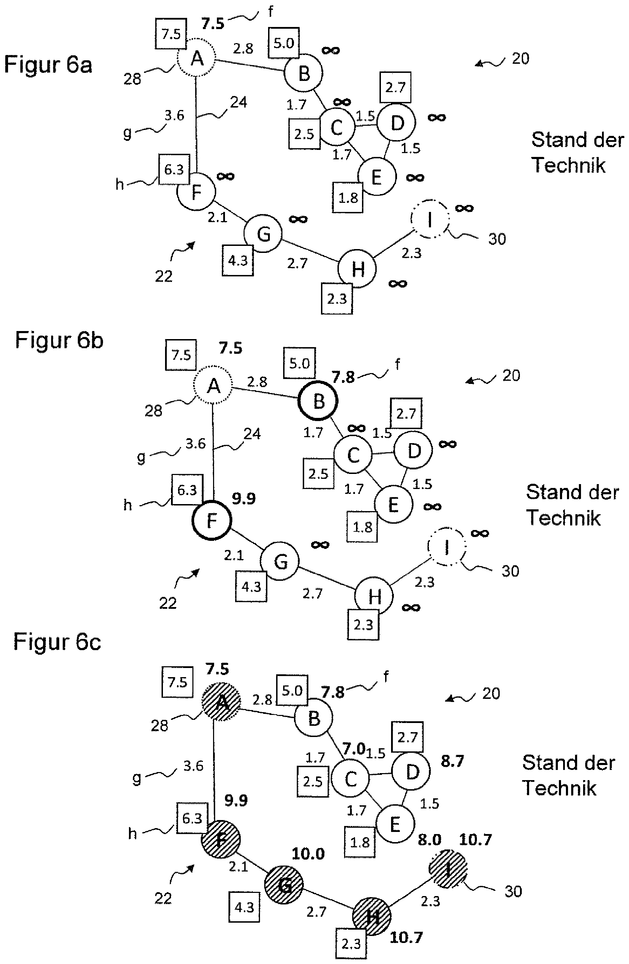

Die Figuren 6a bis 6c zeigen jeweils einen Graph 22 für ein vorgegebenes Gebiet 20 zur Ermittlung einer Route von einem Ausgangsknoten 28 zu einem Zielknoten 30. Der Graph 22 weist Knoten und Kanten, die auch Verbindungen 24 genannt werden, auf. Die in den Figuren 6a bis 6c gezeigten Graphiken dienen der Veranschaulichung einer Ermittlung einer optimalen Route mit dem A*-Algorithmus gemäß dem Stand der Technik. Die optimale Route ist hierbei optimal in Bezug auf die Kantenkosten g, beispielsweise am schnellsten oder am kürzesten oder am einfachsten.

In den Figuren 6a bis 6c sind den Knoten zur einfacheren Unterscheidung Namen in Form von Großbuchstaben des lateinischen Alphabets zugeordnet. Der Ausgangsknoten 28 weist den Buchstaben A auf und wird im Folgenden auch A-Knoten genannt. Der Zielknoten 30 weist den Buchstaben I auf und wird im Folgenden auch I-Knoten genannt.

Die in den Figuren 6a bis 6c gezeigten normal gedruckten Zahlen, die neben den Verbindungen 24 angeordnet sind, repräsentieren jeweilige Kantenkosten g, zum Beispiel eine Streckendistanz zwischen den beiden Knoten, die die Verbindung 24 verbindet. Jedem Knoten des Graphen 22 ist ein zielknotenbezogener Heuristikwert h zugeordnet. Der zielknotenbezogene Heuristikwert h repräsentiert geschätzte Kosten bezogen auf den jeweiligen Knoten und den Zielknoten 30.

In den Figuren 6a bis 6c ist der jeweilige zielknotenbezogene Heuristikwert h für den jeweiligen Knoten in einem Kästchen neben dem jeweiligen Knoten eingetragen. Die in den Figuren 6a bis 6c gezeigten zielknotenbezogenen Heuristikwerte h repräsentieren jeweils die Euklidische Distanz von dem jeweiligen Knoten zu dem Zielknoten 30.

Bei dem A*-Algorithmus werden immer die Knoten zuerst untersucht, die wahrscheinlich schnell zum Zielknoten 30 führen. Ausgehend von dem Ausgangsknoten 28 werden für die Knoten, die eine Verbindung 24 zu dem Ausgangsknoten 28 aufweisen, Gesamtkosten f ermittelt. In dem in Figur 6b gezeigten Beispiel sind das der B-Knoten und der F-Knoten.

Der Knoten, der die niedrigsten Gesamtkosten f aufweist, wird als nächstes expandiert, das heißt ausgehend von diesem Knoten werden die Gesamtkosten f der Knoten ermittelt, die eine Verbindung 24 zu diesem Knoten aufweisen.

Die Gesamtkosten f sind hierbei die Summe der Kantenkosten g einer optimalen Route vom Ausgangsknoten 28 bis zum aktuellen Knoten 22a, im Folgenden auch kumulative Kantenkosten genannt, plus dem zielknotenbezogenen Heuristikwert h. Die Gesamtkosten können gemäß der Formel in Gl.1

$$f(x) = cum(x) + h(x) \hspace{4cm} Gl. 1$$

ermittelt werden, wobei cum(x) die kumulativen Kantenkosten und h(x) den zielknotenbezogenen Heuristikwert h repräsentiert für einen Knoten x.

Für den B-Knoten ergibt sich bezogen auf den Ausgangsknoten 28, in diesem Fall der A-Knoten, mit den in Figur 6a beispielhaft angegebenen Zahlenwerten für die Gesamtkosten f

$$f(B,I) = cum(A,B) + h(B,I) = g(A,B) + h(B,I) = 2,8 + 5 = 7,8$$

und für den F-Knoten

$$f(F,I) = cum(A,F) + h(F,I) = g(A,F) + h(F,I) = 3,6 + 6,3 = 9,9.$$

Hierbei repräsentiert g(x,y) die Kantenkosten g des Knoten x bezogen auf seinen Nachbarknoten y, der bezogen auf die optimale Route ein direkter Vorgängerknoten ist.

In diesem Fall weist der B-Knoten die geringeren Gesamtkosten f auf und wird daher als nächstes expandiert.

Für den C-Knoten ergeben sich mit den in Figur 6a beispielhaft angegebenen Zahlenwerten folgende Gesamtkosten f:

$$f(C,I) = cum(A,C) + h(C,I) = g(A,B) + g(B,C) + h(C,I) = 7,00$$

Die Gesamtkosten f für den jeweiligen Knoten sind in Figur 6c jeweils fettgedruckt neben den Knoten gezeigt. Knoten, für die noch keine Gesamtkosten f ermittelt wurden, wird, wie in Figur 6a und 6b gezeigt, zunächst der Wert Unendlich zugewiesen.

Wie in Figur 6a bis 6c zu erkennen ist, weist weder der C-Knoten, noch der D-Knoten noch der E-Knoten eine Verbindung 24 zu dem Zielknoten 30 auf. Um von dem E-Knoten zum I-Knoten zu kommen, müssen sämtliche Knoten, der C-, B-, A-, F-, G-, und H-Knoten, durchlaufen werden. Solch ein Fall kann beispielsweise auftreten, wenn sich in einem realen Landschaftsgebiet ein Fluss und/oder Eisenbahnschienen und/oder ein anderes nicht überwindbares Hindernis zwischen dem E-Knoten und dem I-Knoten befindet. In diesem Fall bildet die gewählte Heuristikfunktion die realen Strecken- und/oder Wegeverhältnisse des Gebiets 20 nicht ausreichend genau ab und ein Ermitteln der optimalen Route benötigt mehr Rechenschritte und dauert daher länger.

Die Expansion wird in dem in Figur 6a bis 6c gezeigten Fall ausgehend von dem F-Knoten fortgesetzt. Die optimale Route verläuft vom A-Knoten über den F-, G-, und H-Knoten zum I-Knoten.

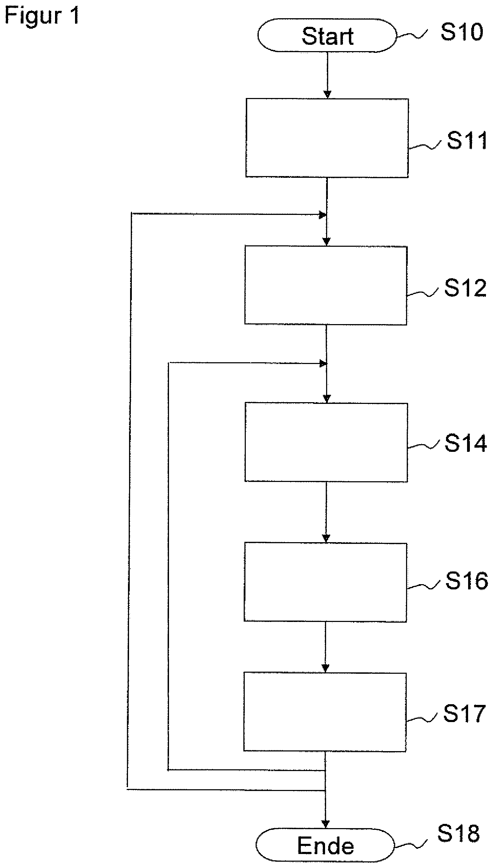

Figur 1 zeigt ein beispielhaftes Ablaufdiagramm eines ersten Programms zum Ermitteln von Korrekturwerten k, die für einen Routenermittlungsalgorithmus, wie beispielsweise für den A*-Algorithmus, genutzt werden können. Das erste Programm dient der Vorbereitung und Kompilierung der digitalen Kartendaten und wird vorzugsweise vor Auslieferung eines Navigationsgerätes, das diese digitalen Kartendaten nutzt, ausgeführt. Das erste Programm wird beispielsweise auf einer stationären Recheneinheit im Backend eines Navigationsgeräteherstellers, zum Beispiel auf einem Backend-Server, ausgeführt.

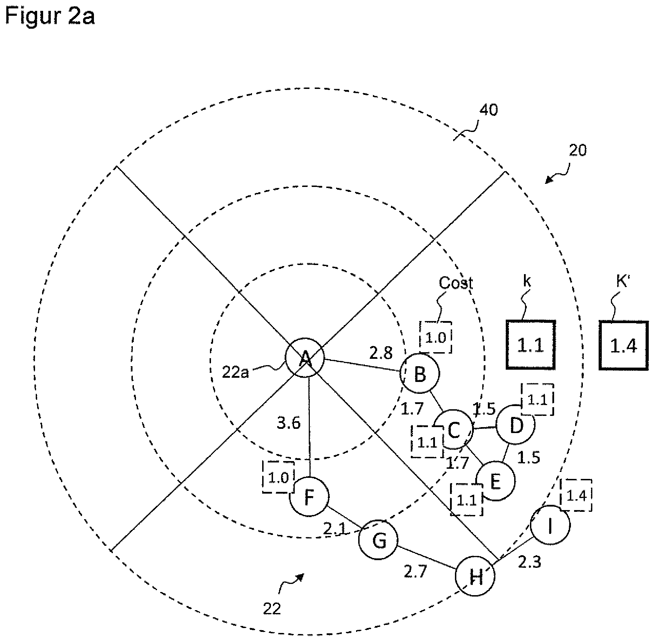

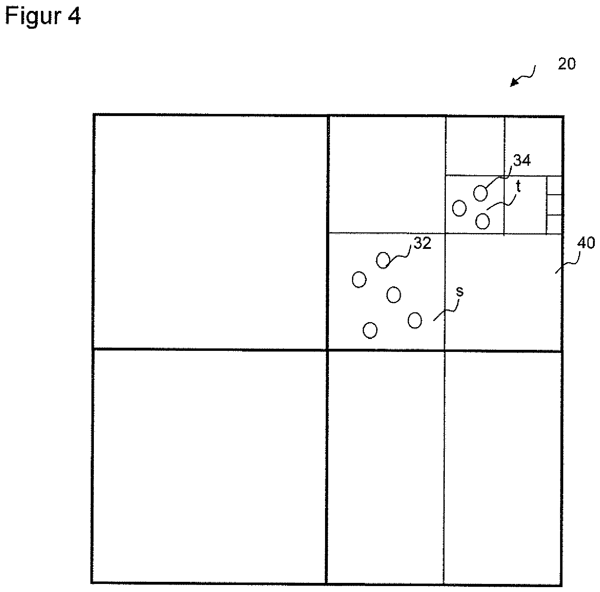

Die Korrekturwerte k werden auf Basis von digitalen Kartendaten für ein Streckennetz und/oder Wegenetz eines vorgegebenen Gebiets 20 (Figur 2a und Figur 4) ermittelt. Die digitalen Kartendaten umfassen jeweilige Knoten des Gebiets 20 und Verbindungen 24 zwischen den jeweiligen Knoten des Gebiets 20. Ferner umfassen die digitalen Kartendaten jeweilige Kantenkosten g für die jeweiligen Verbindungen 24 der Knoten.

In dem in Figur 1 gezeigten Ablaufdiagramm wird das erste Programm in einem Schritt S10 gestartet.

Das Gebiet 20 wird in einem Schritt S11 in mehrere Kacheln 40 (Figur 2a und Figur 4) die geografische Teilgebiete des Gebiets 20 repräsentieren, vorgegeben unterteilt.

In einem Schritt S12 wird jeweils eine der Kacheln 40 als Ausgangskachel bestimmt. Die verbleibenden Kacheln 40 des Gebiets bilden jeweils Bezugskacheln für diese Ausgangskachel, wobei Sonderknoten 32 vorgegeben sind, die in der Ausgangskachel angeordnet sind und die eine echte oder unechte Teilmenge aller Knoten der Ausgangskachel bilden und Sonderknoten 34 vorgegeben sind, die in der jeweiligen Bezugskachel angeordnet sind und die eine echte oder unechte Teilmenge aller Knoten der jeweiligen Bezugskachel bilden.

Die Sonderknoten 32, 34 werden beispielsweise vorgegeben ausgewählt aus sämtlichen Knoten der Ausgangskachel beziehungsweise der Bezugskachel.

Für die jeweilige Ausgangkachel wird jeweils ein Korrekturwert k ermittelt in Bezug auf die jeweilige Bezugskacheln. Hierzu wird in einem Schritt S14 für jeden Sonderknoten 32 der jeweiligen Ausgangskacheln jeweils ein Kostenverhältnis Cost ermittelt in Bezug auf jeden Sonderknoten 34 der jeweiligen Bezugskacheln abhängig von den Kantenkosten g der Verbindungen 24, die zwischen dem jeweiligen Sonderknoten 32 der jeweiligen Ausgangskachel und dem jeweiligen Sonderknoten 34 der jeweiligen Bezugskachel liegen und die eine optimale Route zwischen dem Sonderknoten 32 der jeweiligen Ausgangskachel und dem Sonderknoten 34 der jeweiligen Bezugskachel repräsentieren, und einem Heuristikwert des Sonderknotens 32 der jeweiligen Ausgangskachel in Bezug auf den Sonderknoten 34 der jeweiligen Bezugskachel.

Hierbei umfassen die digitalen Kartendaten beispielsweise die jeweiligen Positionen der Knoten des Gebiets 20 und der Heuristikwert des jeweiligen Sonderknotens 32 der jeweiligen Ausgangskachel in Bezug auf den jeweiligen Sonderknoten 34 der jeweiligen Bezugskachel wird ermittelt abhängig von der Position des jeweiligen Sonderknotens 32 der jeweiligen Ausgangskachel und der Position des jeweiligen Sonderknotens 34 der jeweiligen Bezugskachel.

Hierbei repräsentiert der Heuristikwert des jeweiligen Sonderknotens 32 der jeweiligen Ausgangskachel in Bezug auf den jeweiligen Sonderknoten 34 der jeweiligen Bezugskachel beispielsweise die Euklidische Distanz zwischen dem jeweiligen Sonderknoten 32 der jeweiligen Ausgangskachel und dem jeweiligen Sonderknoten 34 der jeweiligen Bezugskachel.

In einem Schritt S16 wird ein Mittelwert ermittelt abhängig von den ermittelten Kostenverhältnissen Cost.

In einem Schritt S17 wird der Korrekturwert k ermittelt abhängig von den ermittelten Kostenverhältnissen Cost. Der Mittelwert kann hierbei direkt dem Korrekturwert k zugeordnet werden oder der Mittelwert kann durch einen Faktor, der größer als eins ist, dividiert werden, und dann dem Korrekturwert k zugeordnet werden.

Ausgehend von dem Schritt S17 wird das erste Programm in dem Schritt S14 für eine weitere Bezugskachel der jeweiligen Ausgangskachel fortgesetzt, bis für sämtliche Bezugskacheln der jeweiligen Ausgangskachel die Korrekturwert k ermittelt sind.

Ist die Berechnung der Korrekturwerte k für die jeweilige Ausgangskachel abgeschlossen, wird für eine weitere der noch verbliebenen Ausgangskacheln das erste Programm ausgehend von dem Schritt S12 erneut durchlaufen.

Das erste Programm wird in einem Schritt S18 beendet, wenn für sämtliche Ausgangskacheln die Korrekturwerte k ermittelt sind.

Die einzelnen Programmschritte können alternativ zumindest teilweise auch in einer anderen, als in der in Figur 1 angegebenen, Reihenfolge ausgeführt werden.

Vorteilhafterweise können die Korrekturwerte k unabhängig von einer aktuellen Routenermittlung ermittelt werden. Die Ermittlung der Korrekturwerte k kann einmalig ausgeführt werden, insofern keine größeren Änderungen bezüglich der Knoten und Verbindungen 24 in dem vorgegebenen Gebiet 20 auftreten. Dies hat insbesondere den Vorteil, dass sehr leistungsfähige Recheneinheiten zum Ermitteln genutzt werden können. Beispielsweise kann ein Compiler genutzt werden, um Rohdaten zu dem Straßennetz und/oder Wegenetz des Gebiets 20 einzulesen und die für ein vorgegebenes Navigationssystem und/oder Fahrerassistenzsystem relevanten Daten zu selektieren und die Korrekturwerte k zu berechnen und diese Daten in einer kompilierten Datenbank geeignet zusammenzuführen und zu speichern.

Die in Figur 2a bis 2c gezeigten Graphiken veranschaulichen beispielhaft die Ermittlung der Korrekturwerte k. Ausgangspunkt sind hierbei die in den Figuren 6a bis 6c gezeigten Graphen 22. Die Graphen 22 repräsentieren hierbei jeweils beispielhaft das Streckennetz und/oder Wegenetz des vorgegebenen Gebiets 20.

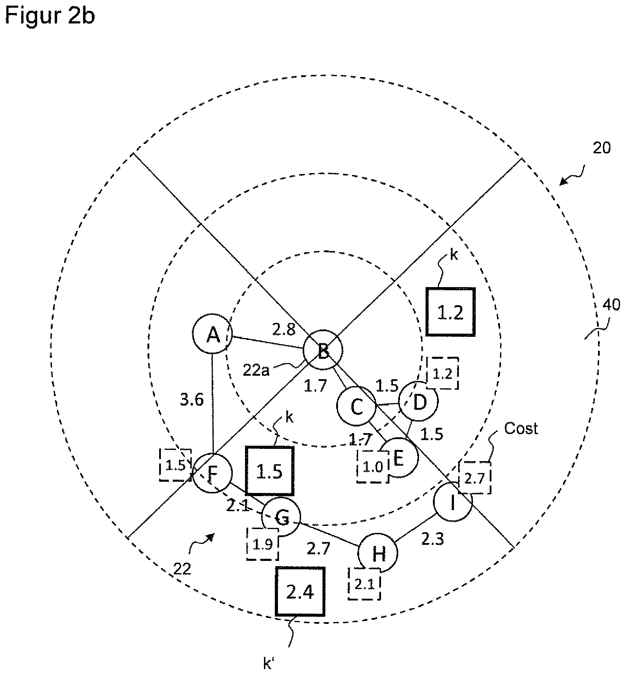

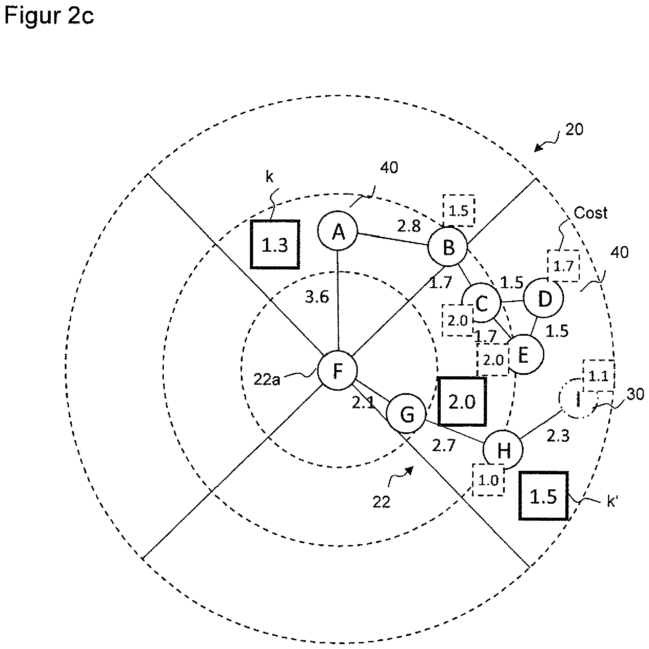

Figur 2a veranschaulicht hierbei beispielhaft die Vorgabe der Bezugskacheln für die Ausgangskachel, die den A-Knoten umfasst, Figur 2b die Vorgabe der Bezugskacheln für die Ausgangskachel, die den B-Knoten umfasst, und Figur 2c die Vorgabe der Bezugskacheln für die Ausgangskachel, die den F-Knoten umfasst.

Bei den in den Figuren 2a bis 2c gezeigten Ausführungsbeispielen sind die Kacheln 40 Segmentbereiche, die jeweils einen vorgegebenen Radiusbereich umfassen ausgehend von der Ausgangskachel, für die die Korrekturwerte k ermittelt werden, und einen vorgegebenen Winkelbereich um die Ausgangskachel. Das Gebiet 20 wird somit in konzentrische Kreissegmente bezogen auf die Ausgangskachel unterteilt.

Die in den Figuren 2a bis 2c gezeigte Aufteilung des Gebiets 20 in Segmentbereiche ist ein mögliches Ausführungsbeispiel. Insbesondere kann die Anzahl der Segmentbereiche und deren Größe mit Bezug auf den jeweiligen Winkelbereich und den jeweiligen Radiusbereich unterschiedlich gewählt werden, zum Beispiel abhängig von einer möglichen Speicherkapazität einer Speichereinheit zum Speichern der digitalen Kartendaten, beispielsweise einer Datenbank für das Navigationssystem, und/oder abhängig von einer Anzahl von Zugriffen auf solch eine Speichereinheit sowie abhängig von den Anforderungen an die Zuverlässigkeit und die Effizienz des Routenermittlungsalgorithmus.

Die in Figur 2a bis 2c gezeigten Graphiken veranschaulichen beispielhaft die Ermittlung der Korrekturwerte k für den Sonderfall, dass die Ausgangskachel jeweils nur einen Sonderknoten 32 umfasst.

Für den B-Knoten ergibt sich bezogen auf den I-Knoten mit den Zahlen aus den Figuren 6b (Heuristikwert h) und 3b Figur (Kantenkosten g) das Kostenverhältnis Cost

$$Cost(B,I) = cum(B,I)/h(B/I) \qquad Gl. \ 1$$

$$= (g(A,B) + g(A,F) + g(F,G) + g(G,H) + g(H,I))/h(B,I)$$
$$= (2,8 + 3,6 + 2,1 + 2,7 + 2,3)/5,0$$
$$= 2,7,$$

wobei cum(B,I) die Summe der Kantenkosten g einer optimalen Route vom B-Knoten zum I-Knoten repräsentiert.

Der Korrekturwert k für die Bezugskachel, die den I-Knoten umfasst, repräsentiert den Mittelwert sämtlicher Kostenverhältnisse Cost dieser Bezugskachel. In dem in Figur 2b gezeigten Beispiel ist der Korrekturwert k für die Bezugskachel, die den I-Knoten umfasst, gleich

$$k(B,\{H,I\}) = (Cost(B,H) + Cost(B,I))/2 \qquad Gl. \ 2$$
$$= (2,1 + 2,7)/2 = 2,4.$$

Für eine weitere Bezugskachel, die den F-, G- und E-Knoten umfasst, ist der Korrekturwert k gleich

$$k(B,\{F,G,E\}) = (Cost(B,F) + Cost(B,G) + Cost(B,E))/3$$
$$= (1,5 + 1,9 + 1,0)/3 = 1,5.$$

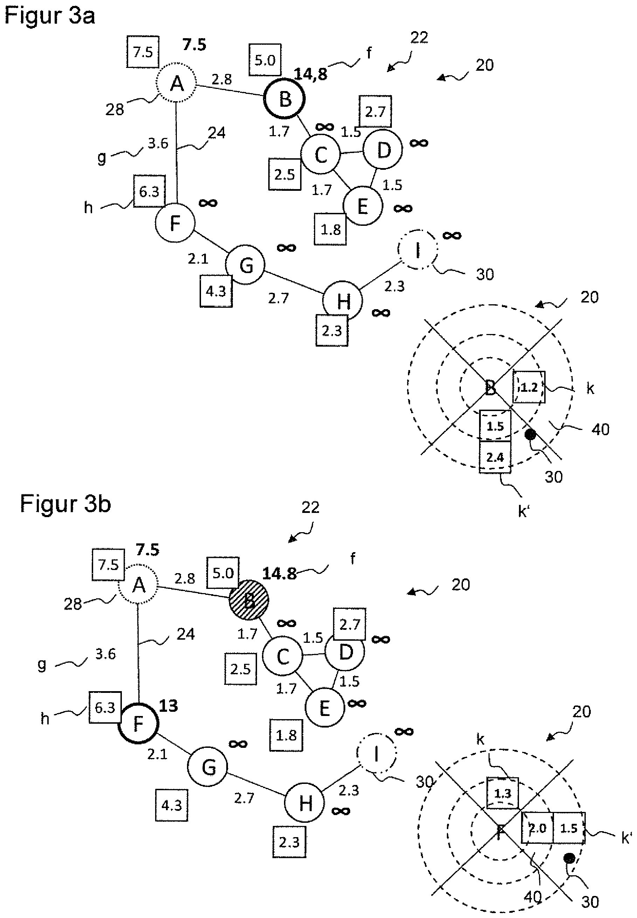

In den Figuren 2a bis 2c sind die Kostenverhältnisse Cost der einzelnen Knoten in den kleinen Kästchen mit gestricheltem Rand angegeben und die jeweiligen Korrekturwerte k in den großen Kästchen mit fett gedrucktem Rand.
Die Korrekturwerte k für die anderen Knoten können in analoger Weise ermittelt werden.
Die in den Figuren 3a bis 3c gezeigten Graphiken veranschaulichen die Ermittlung der Route abhängig von den Korrekturwerten k.
Das Ermitteln der Route kann mittels eines geeignet ausgebildeten zweiten Programms abhängig von digitalen Kartendaten erfolgen, die die Daten umfassen, die auch für die Berechnung der Korrekturwerte k genutzt werden und die die ermittelten Korrekturwerte k umfassen.
Das zweite Programm kann von einer geeignet ausgebildeten Recheneinheit, die einen Programmspeicher aufweist, ausgeführt werden. Diese Recheneinheit kann auch Vorrichtung zum Ermitteln einer Route und/oder Routenermittlungseinrichtung genannt werden. Vorzugsweise wird das zweite Programm von einem Navigationsgerät während einer aktuellen Routenberechnung des Navigationsgeräts ausgeführt.
Die Route von einem vorgegebenen Ausgangsknoten 28 zu einem vorgegebenen Zielknoten 30 wird hierbei derart ermittelt, dass für eine mögliche Expansion eines jeweiligen aktuellen Knotens 22a für den aktuellen Knoten 22a die Gesamtkosten f ermittelt werden abhängig von der Summe der Kantenkosten g der optimalen Route vom Ausgangsknoten 28 bis zum aktuellen Knoten 22a und dem vorgegebenen zielknotenbezogenen Heuristikwert h für den aktuellen Knoten 22a und einem gespeicherten zielknotenbezogenen Korrekturwert k', der mittels des ersten Programms für die Ausgangskachel, die den aktuellen Konten 22a umfasst, bezogen auf die Bezugskachel, die den Zielknoten umfasst, ermittelt wurde.
Die Berechung der Gesamtkosten f für den Knoten x kann gemäß Gl. 3 erfolgen:

$$f(x) = cum(x) + h(x) * k'(x) \qquad Gl. \ 3$$

Hierbei ist k'(x) der auf den Zielknoten bezogene Korrekurwert.
Für den B-Knoten ergeben sich bezogen auf den Zielknoten 30 gemäß Gl. 3 die folgenden Gesamtkosten f:

$$f(B,I) = cum(B,I) + h(B,I) * k'(B,\{H,I\})$$
$$= g(A,B) + h(B,I) * k'(B,\{H,I\})$$
$$= 2,8 + 5 * 2,4 = 14,8$$

Für den F-Knoten ergeben sich bezogen auf den Zielknoten 30 gemäß Gl. 3 die folgenden Gesamtkosten f:

$$f(F,I) = cum(F,I) + h(F,I) * k'(F,\{H,E,D,I\})$$
$$= g(A,F) + h(F,I) * k'(F,\{H,E,D,I\})$$
$$= 3,6 + 6,3 * 1,5 = 13,1$$

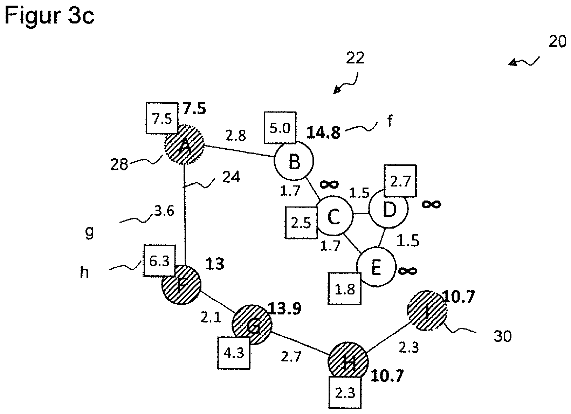

In diesem Fall weist der F-Knoten die geringeren Gesamtkosten f auf und wird daher als nächstes expandiert.
Die Gesamtkosten f für den jeweiligen Knoten sind in Figur 3c jeweils fettgedruckt neben dem Knoten gezeigt.

Die optimale Route verläuft vom A-Knoten über den F-, G-, und H-Knoten zum I-Knoten. Im Vergleich zu der Ermittlung der Route ohne Korrekturwerte k wird in diesem Falle die optimale Route mit wesentlich weniger Berechnungsschritte ermittelt.

Die Aufteilung des Gebiets 20 in Kacheln 40 kann alternativ auch entlang von kartesischen Koordinaten, wie beispielsweise in Figur 4 gezeigt, erfolgen.

Die Kacheln 40 können unterschiedliche Größen aufweisen, beispielsweise können die Kacheln 40 in städtischen Gebieten mit einer hohen Straßendichte kleiner gewählt werden als in ländlichen Gebieten mit einer relativ geringen Straßendichte.

Beispielsweise wird das vorgegebene Gebiet 20, wie in Figur 4 gezeigt, in M Kacheln 40 unterteilt. Die Anzahl von Knoten in jeder der Kacheln 40 beträgt jeweils $N_i$ mit i = 1 bis M.

Des Weiteren ist ein Vektor definiert, $v_i$ mit i = 1 bis M, der die Anzahl $n_i$ mit i = 1 bis M von Sonderknoten 32, 34 in den jeweiligen Kacheln 40 festlegt, welche für die Berechnung der Kosten benötigt werden, laut der Regel:

$$n_i = \max[floor(N_i q_{i,}); 1] \hspace{3cm} \text{Gl. 4}$$

mit $0 \leq q_i \leq 1$,

wobei die Abrundungsfunktion (engl. floor function) einer reellen Zahl die nächstkleinere ganze Zahl zuordnet.

Die jeweiligen Sonderknoten 32, 34 werden vorzugsweise aus der Menge sämtlicher Knoten der jeweiligen Kachel 40 vorgegeben ausgewählt. Dies kann mittels vorgegebener Regeln erfolgen, die eine Verteilung der ausgewählten Sonderknoten 32, 34 möglichst homogen aus geographischer beziehungsweise geometrischer Sicht erzeugen.

Für das in Figur 4 gezeigte Beispiel werden die Korrekturwerte k für die A*-Heuristik wie folgt berechnet:

$$k_{s,t} = \frac{\sum_{\substack{i=1,n_s \\ j=1,n_t}} \left[ \frac{R(P_{s,i}; P_{t,j})}{d(P_{s,i}; P_{t,j})} \right]}{n_s n_t} \hspace{3cm} \text{Gl. 5}$$

wobei

- $k_{s,t}$ der Korrekturwert ist für eine Route zwischen einer ersten Kachel s und einer zweiten Kachel t,
- R eine Funktion zur Berechnung der Routenkosten zwischen zwei Knoten ist,
- d eine Funktion zur Berechung der Euklidischen Distanz zwischen zwei Knoten ist,
- $P_{s,i}$ ist der i-te Knoten von der ersten Kachel s,
- $P_{t,i}$ ist der i-te Knoten von der zweiten Kachel t,
- $n_s$ ist die Anzahl der Sonderknoten 32 in der ersten Kachel s,
- $n_t$ ist die Anzahl der Sonderknoten 34 in der zweiten Kachel t,

Hierbei repräsentiert die erste Kachel s die Ausgangskachel und die zweite Kachel t repräsentiert eine der Bezugskacheln.

Die Korrekturwerte k können effizient in Form einer Matrix in einer Datenbank gespeichert werden, die die Korrekturwerte k von einer beliebigen Kachel 40 zu einer beliebigen weiteren Kacheln 40 enthält.

$$K = \begin{bmatrix} k_{11} & \dots & k_{1m} \\ \dots & \dots & \dots \\ k_{M1} & \dots & k_{MM} \end{bmatrix}$$

Die diagonalen Elemente der Matrix K weisen den Wert Eins auf.

Für die Routenberechnung werden sämtlichen Knoten, die in einer der Ausgangskacheln angeordnet sind, die Korrekturwerte k zugeordnet, die für diese Ausgangskachel ermittelt wurden.

Eine Routenberechnung von Knoten X zum Knoten Y erfolgt dann beispielsweise mit folgenden Schritten:

- Es wird eine erste Kachel ermittelt, in dem der Knoten X angeordnet ist.
- Es wird eine zweite Kachel ermittelt, in dem der Knoten Y angeordnet ist.
- Es wird der Korrekturwert k aus der Datenbank ausgelesen, der für die erste Kachel in Bezug auf die zweite Kachel ermittelt wurde.
- Der Korrekturwert k wird mit dem A*-Algorithmus angewendet, wie vorne im Zusammenhang mit den Figuren 3a bis 3c beschrieben.

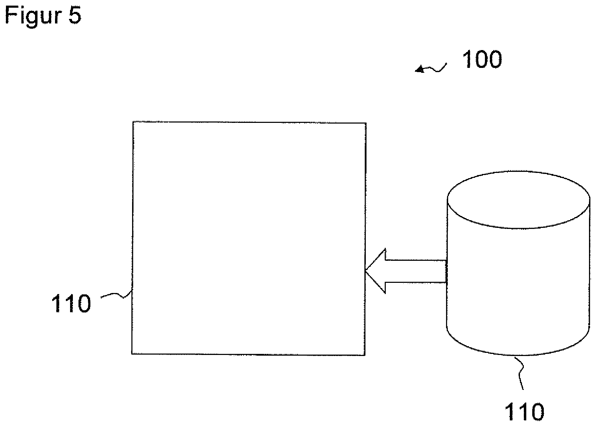

Figur 5 zeigt ein System, das die Speichereinheit und die Vorrichtung zum Ermitteln der Route umfasst. In der Speichereinheit sind die digitalen Kartendaten für das Streckennetz und/oder Wegenetz des vorgegebenen Gebiets 20 gespeichert. Die Vorrichtung ist mit der Speichereinheit signaltechnisch gekoppelt und ausgebildet, die digitalen Kartendaten aus der Speichereinheit auszulesen. Hierbei umfassen die digitalen Kartendaten die jeweiligen Knoten des Gebiets 20 und die Verbindungen 24 zwischen den jeweiligen Knoten des Gebiets 20. Ferner umfassen die digitalen Katendaten die jeweiligen Kantenkosten g für die jeweiligen Verbindungen 24 der Knoten. Des Weiteren umfassen die digitalen Kartendaten eine Menge von Korrekturwerten k, die mittels des ersten Programms ermittelt wurden.

Das System kann Teil eines Navigationssystems für ein Fahrzeug und/oder für Personen und/oder Teil eines Fahrerassistenzsystems und/oder eines mobilen Endgerätes, zum Beispiel eines Smartphones, und/oder eines Computers sein. Die Speichereinheit kann insbesondere eine Datenbank umfassen.

Bezugszeichenliste

| | |
|------|------|
| 20 | Gebiet |
| 22 | Graph |
| 22a | aktueller Knoten |
| 24 | Verbindung |
| 28 | Ausgangsknoten |
| 30 | Zielknoten |
| 32 | Sonderknoten einer Ausgangskachel |
| 34 | Sonderknoten einer Bezugskachel |
| 40 | Kachel |
| 100 | System |
| 110 | Vorrichtung |
| 120 | Speichereinheit |
| g | Kantenkosten |
| h | zielknotenbezogener Heuristikwert |
| k' | zielknotenbezogener Korrekturwert |
| k | Korrekturwert |
| Cost | Kostenverhältnis |
| f | Gesamtkosten |
| S10, ..., S18 | Programmschritte |

**Patentansprüche**

1. Verfahren zum Ermitteln von Korrekturwerten (k) für einen Routenberechnungsalgorithmus zur Verwendung in einem Verfahren nach Anspruch 6 auf Basis von digitalen Kartendaten für ein Streckennetz und/oder Wegenetz eines vorgegebenen Gebiets (20), wobei die digitalen Kartendaten umfassen:

   - Jeweilige Knoten des Gebiets (20) und Verbindungen (24) zwischen den jeweiligen Knoten des Gebiets (20) und
   - jeweilige Kantenkosten (g) für die jeweiligen Verbindungen (24) der Knoten, und bei dem
   - das Gebiet (20) vorgegeben in mehrere Kacheln (40) unterteilt wird, für die die Korrekturwerte (k) ermittelt werden, wobei
   - jeweils eine der Kacheln (40) des Gebietes (20) als Ausgangskachel bestimmt wird und die jeweils verbleibenden Kacheln (40) als Bezugskacheln bestimmt werden, wobei Sonderknoten (32) vorgegeben sind, die in der Ausgangskachel angeordnet sind und die eine echte oder unechte Teilmenge aller Knoten der Ausgangskachel bilden und Sonderknoten (34) vorgegeben sind, die in der jeweiligen Bezugskachel angeordnet sind und die eine echte oder unechte Teilmenge aller Knoten der jeweiligen Bezugskachel bilden,
- für die jeweilige Ausgangkachel jeweils in Bezug auf eine der Bezugskacheln der Korrekturwert (k) ermittelt wird, derart dass

-- für jeden Sonderknoten (32) der jeweiligen Ausgangskachel jeweils ein Kostenverhältnis (Cost) ermittelt wird in Bezug auf jeden Sonderknoten (34) der jeweiligen Bezugskachel abhängig von den Kantenkosten (g) der Verbindungen (24), die zwischen dem jeweiligen Sonderknoten (32) der Ausgangskachel und dem jeweiligen Sonderknoten (34) der jeweiligen Bezugskachel liegen und die eine optimale Route zwischen dem jeweiligen Sonderknoten (32) der Ausgangskachel und dem jeweiligen Sonderknoten (34) der jeweiligen Bezugskachel repräsentieren, und einem Heuristikwert des jeweiligen Sonderknotens (32) der Ausgangskachel in Bezug auf den jeweiligen Sonderknoten (34) der jeweiligen Bezugskachel,
-- ein Mittelwert ermittelt wird abhängig von den ermittelten Kostenverhältnissen (Cost) und
-- abhängig von dem Mittelwert der Korrekturwert (k) der Ausgangskachel ermittelt wird in Bezug auf die jeweilige Bezugskachel.

2. Verfahren nach Anspruch 1,
bei dem die digitalen Kartendaten die jeweiligen Positionen der Knoten des Gebiets (20) umfassen und der Heuristikwert des jeweiligen Sonderknotens (32) der Ausgangskachel in Bezug auf den jeweiligen Sonderknoten (34) der Bezugskachel ermittelt wird abhängig von der Position des jeweiligen Sonderknotens (32) der Ausgangskachel und der Position des jeweiligen Sonderknotens (34) der Bezugskachel.

3. Verfahren nach Anspruch 1,
bei dem die digitalen Kartendaten vorgegebene Heuristikwerte für die jeweiligen Knoten in Bezug auf die jeweils anderen Knoten des Gebiets (20) umfassen, die jeweils geschätzte Kosten von dem jeweils einen Knoten zu dem jeweils anderen Knoten repräsentieren, und somit der Heuristikwert des jeweiligen Sonderknotens (32) der Ausgangskachel in Bezug auf den jeweiligen Sonderknoten (34) der Bezugskachel vorgeben ist.

4. Verfahren nach einem der vorstehenden Ansprüche,
bei dem der Heuristikwert des jeweiligen Sonderknotens (32) der Ausgangskachel in Bezug auf den jeweiligen Sonderknoten (34) der Bezugskachel die Euklidische Distanz repräsentiert zwischen dem jeweiligen Sonderknoten (32) der Ausgangskachel und dem jeweiligen Sonderknoten (34) der Bezugskachel.

5. Verfahren nach einem der vorstehenden Ansprüche,
bei dem der Mittelwert der Kostenverhältnisse (Cost) einen arithmetischen Mittelwert der Kostenverhältnisse (Cost) repräsentiert.

6. Verfahren zum Ermitteln einer Route für ein Navigationssystem und/oder ein Fahrerassistenzsystem, dem zumindest eine Speichereinheit zum Speichern von digitalen Kartendaten für ein Streckennetz und/oder Wegenetz eines vorgegebenen Gebiets (20) zugeordnet ist, wobei die digitalen Kartendaten umfassen:

- Jeweilige Knoten des Gebiets (20) und Verbindungen (24) zwischen den jeweiligen Knoten des Gebiets (20),
- jeweilige Kantenkosten (g) für die jeweiligen Verbindungen (24) der Knoten und
- eine Menge von Korrekturwerten (k), die gemäß dem Verfahren nach einem der Ansprüche 1 bis 5 ermittelt sind, bei dem

die Route von einem vorgegebenen Ausgangsknoten (28) zu einem vorgegebenen Zielknoten (30) ermittelt wird abhängig von einem vorgegebenen Routenkriterium und abhängig von den in der Speichereinheit gespeicherten digitalen Kartendaten derart, dass für eine mögliche Expansion eines jeweiligen aktuellen Knotens (22a) für den aktuellen Knoten (22a) Gesamtkosten (f) ermittelt werden abhängig von einer Summe von Kantenkosten (g) einer optimalen Route vom Ausgangsknoten (28) bis zum aktuellen Knoten (22a) und einem zielknotenbezogenen Heuristikwert (h) für den aktuellen Knoten (22a), der jeweils geschätzte Kosten von dem aktuellen Knoten (22a) zu dem Zielknoten (30) repräsentiert, und einem zielknotenbezogen Korrekturwert (k') für den aktuellen Knoten (22a), der abhängig von dem aktuellen Knoten (22a) und dem Zielknoten (30) aus der Menge an Korrekturwerten (k) ausgewählt wird.

7. Verfahren nach Anspruch 6,
bei dem die digitalen Kartendaten die jeweiligen Positionen der Knoten des Gebiets (20) umfassen und der zielknotenbezogene Heuristikwert (h) ermittelt wird abhängig von der Position des aktuellen Knotens (22a) und der Position des Zielknotens (30).

8. Verfahren nach Anspruch 6 oder 7,
bei dem die digitalen Kartendaten vorgegebene Heuristikwerte für die jeweiligen Knoten in Bezug auf die jeweils anderen Knoten des Gebiets (20) umfassen, die jeweils geschätzte Kosten von dem jeweils einen Knoten zu dem jeweils anderen Knoten repräsentieren, und der zielknotenbezogene Heuristikwert (h) somit vorgegeben ist.

9. Verfahren nach einem der vorstehenden Ansprüche 6 bis 8,
bei dem der jeweilige zielknotenbezogene Heuristikwert (h) die Euklidische Distanz zwischen dem aktuellen Knoten (22a) und dem Zielknoten (30) repräsentiert.

10. Vorrichtung zum Ermitteln einer Route für ein Navigationssystem und/oder ein Fahrerassistenzsystem, dem zumindest eine Speichereinheit zum Speichern von digitalen Kartendaten zugeordnet ist, wobei die digitalen Kartendaten für ein Streckennetz und/oder Wegenetz eines vorgegebenen Gebiets (20) umfassen:

- Jeweilige Knoten des Gebiets (20) und Verbindungen (24) zwischen den jeweiligen Knoten des Gebiets (20),
- jeweilige Kantenkosten (g) für die jeweiligen Verbindungen (24) der Knoten und
- eine Menge an Korrekturwerten (k), die gemäß dem Verfahren nach einem der Ansprüche 1 bis 5 ermittelt sind, wobei die Vorrichtung ausgebildet ist, das Verfahren nach einem der Ansprüche 6 bis 9 auszuführen.

11. System, das eine Speichereinheit und eine Vorrichtung gemäß Anspruch 10 aufweist und bei dem in der Speichereinheit digitale Kartendaten für ein Streckennetz und/oder Wegenetz eines vorgegebenen Gebiets (20) gespeichert sind und die Vorrichtung mit der Speichereinheit signaltechnisch gekoppelt ist und ausgebildet ist, die digitalen Kartendaten aus der Speichereinheit auszulesen, wobei die digitalen Kartendaten umfassen:

- Jeweilige Knoten des Gebiets (20) und Verbindungen (24) zwischen den jeweiligen Knoten des Gebiets (20),
- jeweilige Kantenkosten (g) für die jeweiligen Verbindungen (24) der Knoten und
- eine Menge an Korrekturwerten (k), die gemäß dem Verfahren nach einem der Ansprüche 1 bis 5 ermittelt sind.

12. Computerprogrammprodukt, umfassend ausführbaren Programmcode, wobei der Programmcode bei Ausführung durch eine Datenverarbeitungsvorrichtung die Schritte des Verfahrens nach einem der Ansprüche 1 bis 5 ausführt.

**Claims**

1. A method for determining correction values (k) for a route calculation algorithm for use in a method according to claim 6 based on digital map data for a road network and/or a path network of a predetermined area (20), wherein the digital map data comprise:

- respective nodes of the area (20) and connections (24) between the respective nodes of the area (20), and
- respective edge costs (g) for the respective connections (24) of the nodes, and wherein
- the area (20) is divided in a predetermined manner into a plurality of tiles (40) for which the correction values (k) are determined, wherein
- one of the tiles (40) of the area (20) is respectively determined as a starting tile and the respectively remaining tiles (40) are determined as reference tiles, wherein special nodes (32) are predetermined which are arranged in the starting tile and form a true or artificial subset of all nodes of the starting tile, and special nodes (34) are predetermined which are arranged in the respective reference tile and form a true or artificial subset of all nodes of the respective reference tile,
- the correction value (k) is respectively determined for the respective starting tile with respect to one of the reference tiles such that

-- for each special node (32) of the respective starting tile, a respective cost ratio (cost) is determined with respect to each special node (34) of the respective reference tile, subject to the edge costs (g) of the connections (24) which lie between the respective special node (32) of the starting tile and the respective special node (34) of the respective reference tile and which represent an optimum route between the respective special node (32) of the starting tile and the respective special node (34) of the respective reference tile, and a heuristic value of the respective special node (32) of the starting tile with respect to the respective special node (34) of the respective reference tile,
-- an average is determined subject to the determined cost ratios (cost) and
-- subject to the average, the correction value (k) of the starting tile with respect to the respective reference tile is determined.

2. A method according to claim 1, wherein the digital map data comprise the respective positions of the nodes of the area (20), and the heuristic value of the respective special node (32) of the starting tile with respect to the respective special node (34) of the reference tile is determined subject to the position of the respective special node (32) of the starting tile and to the position of the respective special node (34) of the reference tile.

3. A method according to claim 1, wherein the digital map data comprise predetermined heuristic values for the respective nodes with respect to the other nodes in each case of the area (20) which respectively represent estimated costs from one node in each case to the other node in each case, and the heuristic value of the respective special node (32) of the starting tile with respect to the respective special node (34) of the reference tile is thus predetermined.

4. A method according to any of the preceding claims, wherein the heuristic value of the respective special node (32) of the starting tile with respect to the respective special node (34) of the reference tile represents the Euclidean distance between the respective special node (32) of the starting tile and the respective special node (34) of the reference tile.

5. A method according to any of the preceding claims, wherein the average of the cost ratios (cost) represents an arithmetic average of the cost ratios (cost).

6. A method for determining a route for a navigation system and/or a driver assistance system which is assigned at least one memory unit for storing digital map data for a road network and/or a path network of a predetermined, area (20), wherein the digital map data comprise:

   - respective nodes of the area (20) and connections (24) between the respective nodes of the area (20),
   - respective edge costs (g) for the respective connections (24) of the nodes, and
   - a set of correction values (k) which are determined according to the method according to any of claims 1 to 5, wherein

   the route from a predetermined starting node (28) to a predetermined destination node (30) is determined subject to a predetermined route criterion and subject to the digital map data, stored in the memory unit, such that for a possible expansion of a respective current node (22a), total costs (f) are determined for the current node (22a), subject to a total of edge costs (g) of an optimum route from the starting node (28) to the current node (22a) and a destination node-based heuristic value (h) for the current node (22a) which represents respectively estimated costs from the current node (22a) to the destination node (30), and a destination node-based correction value (k') for the current node (22a) which is selected from the set of correction values (k) subject to the current node (22a) and to the destination node (30).

7. A method according to claim 6, wherein the digital map data comprise the respective positions of the nodes of the area (20), and the destination node-based heuristic value (h) is determined subject to the position of the current node (22a) and to the position of the destination node (30).

8. A method according to claim 6 or claim 7, wherein the digital map data comprise predetermined heuristic values for the respective nodes with respect to the other nodes in each case of the area (20) which respectively represent estimated costs from one node in each case to the other node in each case, and the destination node-based heuristic value (h) is thus predetermined.

9. A method according to any of the preceding claims 6 to 8, wherein the respective destination node-based heuristic value (h) represents the Euclidean distance between the current node (22a) and the destination node (30).

10. A device for determining a route for a navigation system and/or a driver assistance system which is assigned at least one memory unit for storing digital map data, wherein the digital map data for a road network and/or a path network of a predetermined area (20) comprise:

   - respective nodes of the area (20) and connections (24) between the respective nodes of the area (20), and

- respective edge costs (g) for the respective connections (24) of the nodes, and
- a set of correction values (k) which are determined according to the method according to any of claims 1 to 5, wherein the device is configured to implement the method according to any of claims 6 to 9.

11. A system which has a memory unit and a device according to claim 10 and wherein digital map data for a road network and/or a path network of a predetermined area (20) are stored in the memory unit, and the device is coupled in terms of signals to the memory unit and is configured to read out the digital map data from the memory unit, wherein the digital map data comprise:

- respective nodes of the area (20) and connections (24) between the respective nodes of the area (20),
- respective edge costs (g) for the respective connections (24) of the nodes, and
- a set of correction values (k) which are determined according to the method according to any of claims 1 to 5.

12. A computer program product, comprising an executable program code, wherein the program code, during execution by a data processing device, performs the steps of the method according to any of claims 1 to 5.

**Revendications**

1. Procédé permettant de déterminer des valeurs de correction (k) pour un algorithme de calcul d'itinéraire (destiné à être utilisé lors de la mise en oeuvre du procédé conforme à la revendication 6) à partir de données cartographiques numériques d'un réseau routier et/ou d'un réseau de rues d'un domaine (20) prédéfini, selon lequel les données cartographiques comprennent :

- des noeuds respectifs du domaine (20) et des liaisons (24) entre les noeuds respectifs du domaine (20), et
- des écarts (g) des bords respectifs des différentes liaisons (24) entre les noeuds, et selon lequel :

- le domaine (20) est subdivisé de manière prédéfinie en plusieurs carreaux (40) pour lesquels les valeurs de correction (k) sont déterminées,
- l'un respectif des carreaux (40) du domaine (20) est défini en tant que carreau de départ et les carreaux restants respectifs (40) sont définis en tant que carreaux de référence, sont prédéfinis des noeuds particuliers (32) qui sont situés dans le carreau de départ et forment une partie réelle ou non réelle de tous les noeuds du carreau de départ, et des noeuds particuliers (34) qui sont situés dans le carreau de référence respectif et forment une partie réelle ou non réelle de tous les noeuds du carreau de référence respectif,
- pour le carreau de départ respectif la valeur de correction (k) est déterminée, respectivement par rapport à l'un des carreaux de référence de sorte que,
- pour chaque noeud particulier (32) du carreau de départ respectif soit respectivement déterminé un coefficient d'écart (Cost) par rapport à chaque noeud particulier (34) du carreau de référence respectif en fonction des écarts des bords (g) des liaisons (24) qui sont situées entre le noeud particulier respectif (32) du carreau de départ et le noeud particulier respectif (34) du carreau de référence respectif, et qui représentent un itinéraire optimum entre le noeud particulier respectif (32) du carreau de départ et le noeud particulier respectif (34) du carreau de référence respectif, ainsi qu'une valeur heuristique du noeud particulier (32) respectif du carreau de départ par rapport au noeud particulier (34) respectif du carreau de référence respectif,
- qu'une valeur moyenne soit déterminée en fonction des coefficients d'écart (Cost) déterminés, et
- qu'en fonction de la valeur moyenne, la valeur de correction (k) du carreau de départ soit déterminée par rapport au carreau de référence respectif.

2. Procédé conforme à la revendication 1,
selon lequel les données cartographiques numériques comprennent les positions respectives des noeuds du domaine (20) et la valeur heuristique du noeud particulier respectif (32) du carreau de départ est déterminée par rapport au noeud particulier respectif (34) du carreau de référence, en fonction de la position du noeud particulier respectif (32) du carreau de départ et de la position du noeud particulier respectif (34) du carreau de référence.

3. Procédé conforme à la revendication 1,
selon lequel les données cartographiques numériques comprennent des valeurs heuristiques prédéfinies pour les noeuds respectifs par rapport aux autres noeuds respectifs du domaine (20), qui représentent respectivement les écarts estimés entre le noeud respectif et l'autre noeud respectif et la valeur heuristique du noeud particulier (32) respectif du carreau de départ par rapport au noeud particulier respectif (34) du carreau de référence est ainsi fixée.

4. Procédé conforme à l'une des revendications précédentes,
selon lequel la valeur heuristique du noeud particulier respectif (32) du carreau de départ par rapport au noeud particulier respectif (34) du carreau de référence représente la distance euclidienne entre le noeud particulier respectif (32) du carreau de départ et le noeud particulier respectif (34) du carreau de référence.

5. Procédé conforme à l'une des revendications précédentes,
selon lequel la valeur moyenne des coefficients d'écart (Cost) représente la valeur arithmétique moyenne des coefficients d'écart (Cost).

6. Procédé permettant de déterminer une trajectoire pour un système de navigation et/ou un système d'assistance à un conducteur auquel est associée au moins une unité de mémoire permettant d'enregistrer des données cartographiques numériques d'un réseau routier et/ou d'un réseau de rues d'un domaine (20) prédéfini, ces données cartographiques numériques comprenant :

   - des noeuds respectifs du domaine (20) et des liaisons (24) entre les différents noeuds du domaine (20),
   - des écarts des bords respectifs (g) des liaisons (24) respectives entre les noeuds, et
   - un ensemble de valeurs de correction (k) qui sont déterminées par la mise en oeuvre du procédé conforme à l'une des revendications 1 à 5,
   - selon lequel,
   - l'itinéraire entre un noeud de départ (28) prédéfini et un noeud cible (30) prédéfini est déterminé en fonction d'un critère de trajectoire prédéfini et en fonction des données cartographiques numériques enregistrées dans l'unité de mémoire, de sorte que, pour une expansion possible d'un noeud actuel (22a) respectif, pour ce noeud actuel respectif (22a) des écarts totaux (f) soient déterminés en fonction de la somme des écarts des bords (g) d'un itinéraire optimum entre le noeud de départ (28) et le noeud actuel (22a), d'une valeur heuristique (h) spécifique au noeud cible (h) pour le noeud actuel (22a), qui représente l'écart estimé respectif entre le noeud actuel (22a) et le noeud cible (30), et d'une valeur de correction (k') spécifique au noeud cible pour le noeud actuel (22a) qui est choisie en fonction du noeud actuel (22a) et du noeud cible (30) parmi l'ensemble de valeurs de correction (k).

7. Procédé conforme à la revendication 6,
   **caractérisé en ce que**
   les données cartographiques numériques comprennent les positions respectives des noeuds du domaine (20) et, la valeur heuristique spécifique au noeud cible (h) est déterminée en fonction de la position du noeud actuel (22a) et de la position du noeud cible (30).

8. Procédé conforme à la revendication 6 ou 7,
   selon lequel les données cartographiques numériques comprennent des valeurs heuristiques prédéfinies pour les noeuds respectifs par rapport aux autres noeuds respectifs du domaine (20), qui représentent les écarts estimés respectifs entre le noeud respectif et l'autre noeud respectif et, la valeur heuristique (h) spécifique au noeud cible est ainsi fixée.

9. Procédé conforme à l'une des revendications précédentes 6 à 8,
   selon lequel la valeur heuristique (h) spécifique au noeud cible respectif représente la distance euclidienne entre le noeud actuel (22a) et le noeud cible (30).

10. Dispositif permettant de déterminer une trajectoire pour un système de navigation et/ou un système d'assistance à un conducteur auquel est associée au moins une unité de mémoire pour permettre d'enregistrer des données cartographiques numériques, les données cartographiques numériques pour un réseau routier et/ou un réseau de rues d'un domaine prédéfini (20) comprenant :

    - des noeuds respectifs du domaine (20) et des liaisons (24) entre les différents noeuds du domaine (20),
    - des écarts des bords (g) respectifs des liaisons (24) respectives des noeuds, et
    - un ensemble de valeurs de correction (k) qui sont déterminées par la mise en oeuvre du procédé conforme à l'une des revendications 1 à 5, le dispositif étant réalisé pour permettre la mise en oeuvre du procédé conforme à l'une des revendications 6 à 9.

**11.** Système comprenant une unité de mémoire et un dispositif conforme à la revendication 10, et dans lequel, dans l'unité de mémoire sont enregistrées des données cartographiques numériques pour un réseau routier et/ou un réseau de rues d'un domaine (20) prédéfini, et le dispositif est couplé à l'unité de mémoire par la technique des signaux et est réalisé pour permettre de lire les données cartographiques numériques dans l'unité de mémoire, ces données cartographiques numériques comprenant :

- des noeuds respectifs du domaine (20) et des liaisons (24) entre les noeuds respectifs du domaine (20),
- des écarts des bords respectifs (g) des différentes liaisons (24) entre les noeuds, et
- un ensemble de valeurs de correction (k) qui sont déterminées par la mise en oeuvre du procédé conforme à l'une des revendications 1 à 5.

**12.** Produit programme d'ordinateur comprenant un code de programme pouvant être exécuté, ce code de programme, lors de son exécution par un dispositif de traitement de données mettant en oeuvre les étapes du procédé conforme à l'une des revendications 1 à 5.

Figur 1

Start — S10

S11

S12

S14

S16

S17

Ende — S18

Figur 2a

Figur 2b

# Figur 2c

Figur 3a

Figur 3b

## Figur 3c

Figur 4

Figur 5

100

110

110

Figur 6a

Stand der Technik

Figur 6b

Stand der Technik

Figur 6c

Stand der Technik

**IN DER BESCHREIBUNG AUFGEFÜHRTE DOKUMENTE**

**In der Beschreibung aufgeführte Patentdokumente**

- DE 102008027957 A1